# DEMANDE DE BREVET EUROPEEN

(11) **EP 1 566 559 A1**
(43) Date de publication de la demande: **24.08.2005**
(21) Numéro de dépôt: 05101170.8
(22) Date de dépôt: 16.02.2005
(51) Int. Cl.: F16D 23/06, B22F 5/08

(54) **Procédé de fabrication de pièces mécaniques frittées**

(30) Priorité: 17.02.2004 FR 0450282
(71) Demandeur: Federal Mogul Operations France SAS, 45140 SAINT JEAN DE RUELLE (FR)
(72) Inventeur: Blanchard, Pierre, 38500 Coublevie (FR); Durand, Christophe, 38450 Vif (FR); Sumonja, Emmanuel, 38800 Le Pont De Claix (FR)
(74) Mandataire: de Beaumont, Michel

(57) **Abrégé**

L'invention concerne un procédé de fabrication d'une pièce mécanique (10) en acier fritté, comprenant la compression d'un mélange de poudres ; le frittage ; et la déformation à froid de la pièce frittée (55), la déformation plastique obtenue lors de la déformation à froid étant au moins localement supérieure à 10%.

## Description

La présente invention concerne un procédé de fabrication de pièces mécaniques frittées, notamment des pièces mécaniques frittées ayant une forme complexe. La présente invention trouve notamment une application pour la fabrication de pièces mécaniques utilisées dans une boîte de vitesses, telles qu'un baladeur, une bague de synchronisation, un moyeu, etc.

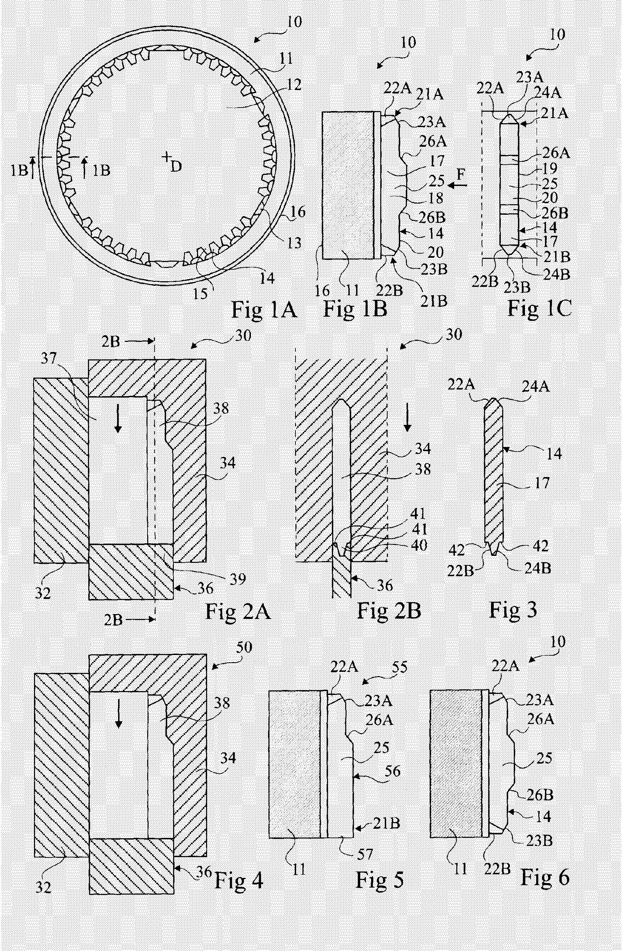

La figure 1A est une vue de face schématique d'un baladeur 10 classique de boîte de vitesses. Le baladeur 10 comprend un corps annulaire 11 traversé par une ouverture cylindrique 12 d'axe D définissant une paroi latérale intérieure 13 du corps annulaire 11 sur laquelle sont réparties des dents 14 séparées par des cannelures 15. Le corps annulaire 11 comprend une paroi latérale extérieure 16 sur laquelle est définie une gorge (non représentée). Dans la boîte de vitesses, le baladeur 10 est monté coaxialement sur un moyeu solidaire d'un arbre d'entraînement d'axe D de la boîte de vitesses. Le moyeu entraîne le baladeur 10 en rotation autour de l'axe D par coopération des dents 14 du baladeur 11 avec des dents du moyeu. Une fourchette coopérant avec la gorge de la paroi latérale extérieure 16 du corps annulaire 11 permet de faire coulisser le baladeur 10 par rapport au moyeu selon l'axe D. Au moins un pignon est monté libre en rotation sur l'arbre d'entraînement à côté du baladeur 10. Lors de la sélection d'un rapport de vitesses utilisant le pignon libre adjacent au baladeur 10, le baladeur 10 est déplacé axialement par rapport au moyeu pour faire coopérer les dents 14 du baladeur 10 avec une couronne à crabot du pignon libre de façon à rendre le pignon solidaire du baladeur et entraîner le pignon en rotation.

La figure 1B est une coupe schématique du baladeur 10 de la figure 1A selon la ligne 1B-1B et la figure 1C est une vue schématique du baladeur 10 de la figure 1B selon la direction F. La dent 14 comprend un corps central 17 sensiblement parallélépipédique allongé s'étendant selon l'axe D et comportant deux faces latérales opposées 18, 19 ayant chacune un bord commun avec le corps annulaire 11 et une face supérieure 20, opposée au corps annulaire 11, reliant les faces latérales 18, 19. Le corps central 17 comprend, selon l'axe D, deux portions d'extrémité 21A, 21B opposées. Chaque portion d'extrémité 21A, 21B est définie par trois faces inclinées 22A, 23A, 24A et 22B, 23B, 24B. Les faces inclinées 22A, 24A, 22B, 24B prolongent les faces latérales 18, 19 du corps central 17 pour se rejoindre et les faces inclinées 23A, 23B prolongent la face supérieure 20 du corps central 17. Les faces inclinées 22A à 24A et 22B à 24B permettent notamment d'optimiser la coopération des dents 14 avec les crabots de la couronne à crabot du pignon libre lors de l'engagement d'un rapport de vitesses. Pour certaines dents 14 du baladeur 10 destinées à coopérer avec un système d'armement supporté par le moyeu, la face supérieure 20 comprend en outre, en partie centrale, une portion en saillie 25 délimitée, selon l'axe D, par deux faces inclinées 26A, 26B. La portion en saillie 25 est généralement absente des dents 14 du baladeur 10 qui ne coopèrent pas avec le système d'armement.

Le baladeur 10 est généralement réalisé à partir d'une pièce monobloc en acier obtenue par forgeage et usinage. Il serait avantageux de réaliser le baladeur en acier fritté. En effet, le procédé de frittage qui correspond au chauffage d'une pièce ébauche obtenue par compression à froid d'un mélange de poudres permet généralement d'obtenir directement une pièce aux dimensions souhaitées, ce qui réduit le nombre d'étapes d'usinage à prévoir et donc réduit le coût de fabrication de la pièce. Toutefois, il s'avère délicat de réaliser un baladeur par un procédé de frittage puisqu'une telle pièce mécanique comporte des surfaces complexes, ce qui rend délicat la phase de compression de la pièce ébauche comme cela est décrit plus en détail ci-dessous.

La figure 2A est une coupe partielle et schématique d'un exemple d'outil 30 pouvant être utilisé pour la fabrication du baladeur 10 précédemment décrit par frittage lors de l'étape de compression à froid. L'outil 30 correspond à un outil classique pour la fabrication de pièces frittées. Seule une partie de l'outil 30 est représentée, l'outil 30 ayant une symétrie de révolution autour de l'axe D (non représenté et qui serait vertical et situé à droite de la figure 2A).

L'outil 30 comprend :
une matrice 32 annulaire d'axe D ;
un poinçon-broche 34 cylindrique d'axe D disposé dans la matrice 32 ; et
un poinçon inférieur 36, qui délimite, avec la matrice 32 et le poinçon-broche 34, une cavité 37.

La réalisation de la pièce ébauche consiste à remplir la cavité 37 d'un mélange de poudres et à comprimer le mélange de poudres par un déplacement du poinçon-broche 34 dans une direction de compression indiquée par une flèche en figure 2A. Pour extraire la pièce ébauche de la cavité 37, le poinçon-broche 34 est déplacé dans une direction opposée à la direction de compression.

La paroi latérale extérieure 16 du baladeur 10 est définie par la matrice 32 tandis que les dents 14 sont définies par le poinçon-broche 34 et le poinçon inférieur 36. Plus précisément, le poinçon-broche 34 comprend des empreintes 38, chaque empreinte 38 ayant une forme complémentaire d'une portion d'une dent 14. Etant donné la direction de déplacement du poinçon-broche 34, il est seulement possible de définir au moyen de chaque empreinte 38 du poinçon-broche 34, les parois latérales 18, 19, les faces inclinées 22A, 23A, 24A de la portion d'extrémité 21A, et la face inclinée 26A de la face supérieure 20, pour permettre la libération du poinçon-broche 34. Les faces inclinées 22B, 23B, 24B de la portion d'extrémité 21B et la face inclinée 26B de la face supérieure 20 sont des surfaces qui ne peuvent pas être obtenues au moyen de l'empreinte 38.

La figure 2B représente une section partielle de la figure 2A selon la ligne 2B-2B. Le poinçon inférieur 36 comprend, pour chaque empreinte 38, une protubérance 39 correspondante, sur laquelle peut coulisser l'empreinte 38 du poinçon-broche 34. Chaque protubérance 39 comprend une empreinte 40 qui définit les faces inclinées 22B et 24B de la dent 14 lors de la compression à froid. Il n'est pas possible de prévoir une protubérance 39 qui s'étend suffisamment dans l'empreinte 38 correspondante pour former les faces inclinées 23B et 26B. Les faces inclinées 23B et 26B sont donc généralement obtenues par des étapes d'usinage ultérieures de la pièce frittée. De telles étapes d'usinage augmentent le coût de fabrication de la pièce. Il peut en outre être difficile d'obtenir par un usinage classique des surfaces complexes.

La figure 3 représente schématiquement une section d'une dent 14 obtenue par l'outil 30.

Pour des raisons de tenue mécanique des outillages, les portions d'extrémité de la protubérance 39 ne peuvent correspondre à des angles vifs mais comprennent nécessairement des méplats 41. Ceci entraîne la formation de méplats 42 correspondants au niveau de la jonction entre les faces inclinées 22B, 24B et les parois latérales 18, 19 sur la dent 14 obtenue. Par ailleurs, les faces latérales 18, 19 étant définies par l'empreinte 38 du poinçon-broche 34 et les faces inclinées 22B, 24B étant définies par l'empreinte 40 du poinçon inférieur 36, il n'est pas possible de contrôler avec précision la forme de la surface de jonction entre les faces inclinées 22B, 24B et les parois latérales 18, 19 sur la dent 14 obtenue. On obtient généralement des bavures ou des défauts de surface indésirables au niveau des surfaces de jonction.

Pour supprimer les méplats 42 et les bavures, il est nécessaire de prévoir, après l'étape de frittage, une étape d'ébavurage, par exemple par brossage, pour améliorer la géométrie de surface au niveau des surfaces de jonction entre les faces inclinées 22B, 24B et les parois latérales 18, 19. Il est toutefois délicat de contrôler avec précision le rayon de courbure des surfaces de jonction par le procédé d'ébavurage. En outre, le procédé d'ébavurage peut altérer de façon indésirable la forme de la surface de jonction entre les faces inclinées 22B et 24B qui est correctement définie, pour chaque dent 14, par l'empreinte 40 associée du poinçon inférieur 36.

Le document FR 2 730 775 décrit un procédé de fabrication d'un manchon coulissant comprenant une étape de frittage d'une ébauche à partir d'une poudre de frittage et une étape de modification de la pièce frittée, par emboutissage, pour former des surfaces en contre-dépouille, l'étape de modification n'entraînant que des déformations plastiques locales de faibles amplitudes de la pièce frittée.

La présente invention vise à obtenir un procédé de fabrication par frittage d'une pièce mécanique permettant de réduire le nombre d'étapes d'usinage à prévoir pour la formation de surfaces de la pièce mécanique.

La présente invention vise également à obtenir un procédé de fabrication par frittage d'une pièce mécanique permettant de supprimer l'apparition de méplats, de bavures ou d'autres défauts de surface au niveau de la pièce mécanique formée par compression d'un mélange de poudres.

Pour atteindre ces objets, la présente invention prévoit un procédé de fabrication d'une pièce mécanique en acier fritté, comprenant les étapes suivantes : compression d'un mélange de poudres ; frittage ; et déformation à froid de la pièce frittée, la déformation plastique obtenue selon la perpendiculaire à la surface de la pièce frittée, étant, au moins au niveau d'une partie de la pièce frittée, supérieure à 10%.

Selon un objet de la présente invention, l'étape de déformation à froid est réalisée au moyen d'un poinçon monobloc comprenant une empreinte ayant une forme complémentaire d'une surface à former sur la pièce mécanique.

Selon un objet de la présente invention, l'étape de compression est réalisée au moyen d'un poinçon monobloc comprenant une empreinte ayant une forme complémentaire d'une surface à former sur la pièce mécanique.

Selon un objet de la présente invention, des premières surfaces, situées au niveau d'une première région de la pièce mécanique, sont formées lors de l'étape de compression et des secondes surfaces, situées au niveau d'une seconde région de la pièce mécanique distincte de la première région, sont formées lors de l'étape de déformation à froid.

Selon un objet de la présente invention, les premières surfaces et les secondes surfaces sont symétriques par rapport à un plan de symétrie de la pièce mécanique et l'étape de compression est réalisée au moyen d'un poinçon comprenant des empreintes ayant une forme complémentaire des premières surfaces, l'étape de déformation à froid étant réalisée au moyen du même poinçon, les secondes surfaces étant formées au moyen des empreintes du poinçon.

Selon un objet de la présente invention, la pièce mécanique est un baladeur de boîte de vitesses.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1A, précédemment décrite, est une vue de face schématique d'un baladeur classique de boîte de vitesses ;
la figure 1B, précédemment décrite, est une coupe schématique et partielle de la figure 1A selon la ligne 1B-1B ;
la figure 1C, précédemment décrite, est une vue schématique et partielle du baladeur de la figure 1B selon la direction F ;
la figure 2A, précédemment décrite, est une coupe schématique d'un outil de fabrication par frittage du baladeur de la figure 1A ;
la figure 2B, précédemment décrite, est une section schématique de la figure 2A selon la ligne 2B-2B ;
la figure 3, précédemment décrite, est une section schématique d'une dent de baladeur obtenue au moyen de l'outil des figures 2A et 2B ;
la figure 4 représente schématiquement un exemple de réalisation d'un outil utilisé à une étape du procédé de fabrication selon l'invention ;
la figure 5 est une coupe partielle et schématique d'une pièce ébauche obtenue au moyen de l'outil de la figure 4 ; et
la figure 6 est une coupe partielle et schématique de la pièce mécanique obtenue par le procédé selon l'invention.

Le procédé de fabrication d'une pièce mécanique en acier fritté selon la présente invention comprend les étapes suivantes :
réalisation, par une étape de compression à froid dans un outil de compression, d'une pièce ébauche mécanique sur laquelle sont formées les premières surfaces en dépouille, par un premier poinçon, et éventuellement une ébauche de secondes surfaces, distinctes des premières surfaces, par un second poinçon ;
frittage de la pièce ébauche ; et
déformation à froid de la pièce frittée dans un outil de formage pour former les secondes surfaces, éventuellement ébauchées.

L'étape de déformation à froid entraîne, en certains emplacements de la pièce ébauche, une déformation plastique, selon la perpendiculaire à la surface de la pièce ébauche, au moins localement supérieure à 10%, et pouvant atteindre et dépasser 20% à 30%. La demanderesse a mis en évidence que, pour des mélanges de poudres correspondant à certains aciers frittés, même avec de telles déformations, la pièce frittée n'est pas fragilisée et conserve les propriétés de résistance mécanique recherchées.

Les étapes de compression à froid et de déformation à froid permettent d'obtenir une pièce frittée pratiquement directement aux dimensions souhaitées. Il n'est alors pas nécessaire de prévoir d'étapes d'usinage ultérieures pour corriger les surfaces obtenues lors des étapes de compression à froid et de déformation à froid. En outre, les surfaces formées aux étapes de compression à froid ou de déformation à froid sont obtenues par des empreintes prévues dans une seule pièce de l'outil de compression ou de l'outil de formage, et non par la coopération de plusieurs pièces de l'outil de compression ou de l'outil de formage se déplaçant les unes par rapport aux autres. De telles surfaces n'ont donc pas de défauts tels que des méplats ou des bavures qui requièrent des étapes de correction supplémentaires.

Le présent procédé peut être suivi par une étape classique de calibrage, dans laquelle la pièce est introduite après l'étape de déformation à froid dans un calibre pour corriger des défauts mineurs, et/ou pour augmenter globalement la densité de la pièce. Une étape de calibrage entraîne seulement des déformations mineures correspondant à une déformation plastique du matériau généralement inférieure à 6%. Les étapes de calibrage et de déformation à froid peuvent être réalisées simultanément.

La présente invention va maintenant être décrite plus en détail dans le cas de la fabrication par frittage du baladeur 10 de la figure 1A.

La figure 4 représente un exemple de réalisation d'un outil 50 utilisé pour l'étape de compression à froid du procédé selon l'invention pour la fabrication d'un baladeur. L'outil 50 est en fait similaire à l'outil 30 représenté en figure 2A et les éléments communs sont indiqués par les mêmes références. La différence principale est que, dans la présente invention, le poinçon inférieur 36 ne comprend pas d'empreintes 40 au niveau des protubérances 39 au moyen desquelles étaient formées, pour chaque dent 14, les faces inclinées 22B, 24B de la portion d'extrémité 21B lors de l'étape de compression à froid comme cela a été décrit en relation avec la figure 2A.

La figure 5 est une coupe partielle et schématique de la pièce ébauche 55 obtenue après l'étape de compression à froid. Une dent intermédiaire 56 de la pièce ébauche 55 est représentée. Seules les faces inclinées 22A, 23A, 24A (la face inclinée 24A n'étant pas visible en figure 5) de la portion d'extrémité 21A et la face inclinée 26A de la portion en saillie 25 sont réalisées sur la dent intermédiaire 56 lors de l'étape de compression à froid. Les faces inclinées 22A, 24A étant obtenues au moyen de l'empreinte 38 du poinçon-broche 34, les surfaces de jonction entre les parois latérales 18, 19 de la dent intermédiaire 56 et les faces inclinées 22A, 24A sont exemptes de méplats, de bavures ou d'autres défauts de surface.

La dent intermédiaire 56 peut comporter, au niveau de la portion d'extrémité 21B, une simple face plane 57 perpendiculaire à l'axe D. Selon une variante de l'exemple de réalisation précédemment décrit, en prévoyant, pour chaque empreinte 38 du poinçon-broche 34, une protubérance 39 adaptée au niveau du poinçon inférieur 36, on peut former à l'étape de compression à froid des surfaces qui sont une ébauche des faces inclinées 22B, 24B à obtenir au niveau de la portion d'extrémité 21B de la dent 14. Il n'est toutefois pas souhaitable de chercher, dès l'étape de compression à froid, à former des surfaces proches des faces inclinées 22B, 24B à obtenir car ceci entraînerait l'apparition de défauts de surface dont la correction est délicate, comme cela a été décrit précédemment.

Selon le présent exemple de réalisation pour chaque dent 14, les portions d'extrémité 21A, 21B et les faces inclinées 26A, 26B sont symétriques. Une fois frittée, la pièce ébauche 55 est alors retournée et peut être introduite à nouveau dans l'outil 50 ou dans un outil similaire à l'outil 50, les portions d'extrémités 21A des dents intermédiaires 56 venant en contact avec le poinçon inférieur 36. Le déplacement du poinçon-broche 34 entraîne la déformation à froid de la pièce ébauche 55. Chaque dent intermédiaire 56 est déformée à froid pour former les faces inclinées 22B, 23B, 24B de la portion d'extrémité 21B et la face inclinée 26B de la portion en saillie 25. Le retrait du poinçon-broche 34 de l'outil 50 par rapport à la pièce ainsi déformée est réalisé sans difficulté.

Dans le cas d'un baladeur comportant au moins une dent 14 ayant des portions d'extrémités 21A, 21B non symétriques et/ou des faces inclinées 26A, 26B non symétriques, l'outil de formage utilisé pour l'étape de déformation à froid est nécessairement différent de l'outil de compression utilisé pour l'étape de compression à froid.

La figure 6 est une coupe schématique du baladeur 10 obtenu après l'étape de déformation à froid pour lequel les surfaces de la dent 14 formées à l'étape de déformation à froid sont indiquées en traits épais. Pour chaque dent 14, les faces inclinées 22B, 23B, 24B de la portion d'extrémité 21B étant obtenues au moyen de l'empreinte 38 du poinçon-broche 34, les surfaces de jonction entre les parois latérales 18, 19 et les faces inclinées 22B, 24B sont exemptes de bavures ou d'autres défauts de surface. Il n'est alors pas nécessaire de prévoir une étape d'ébavurage ultérieure.

Les pressions utilisées à l'étape de compression à froid et à l'étape de déformation à froid, la température utilisée à l'étape de frittage et le mélange de poudres utilisé dépendent notamment de la pièce à réaliser. Dans le présent exemple de fabrication d'un baladeur, le mélange de poudres utilisé correspond à un mélange de poudres classique pour l'obtention d'aciers frittés et l'étape de compression à froid peut être réalisée à des pressions supérieures à 1000 Mégapascals. L'étape de frittage est alors, par exemple, réalisée dans un four à des températures pouvant atteindre par exemple 1150°C et l'étape de déformation à froid est, par exemple, réalisée sous des pressions de l'ordre de 600 à 800 Mégapascals.

Bien entendu, la présente invention est susceptible de diverses variantes et modifications qui apparaîtront à l'homme de l'art. En particulier, bien que la présente invention a été décrite pour la fabrication d'un baladeur, elle trouve une application pour la fabrication d'autres pièces mécaniques, comme, par exemple, un moyeu, une bague de synchronisation, un pignon de démarreur, une couronne à crabot, un pignon hélicoïdal ou toute autre pièce ayant des surfaces complexes ne pouvant être réalisées en une seule opération de compression.

## Revendications

1. Procédé de fabrication d'une pièce mécanique (10) en acier fritté, comprenant les étapes suivantes :
compression d'un mélange de poudres ;
frittage ; et
déformation à froid de la pièce frittée (55), la déformation plastique obtenue selon la perpendiculaire à la surface de la pièce frittée, étant, au moins au niveau d'une partie de la pièce frittée, supérieure à 10%.

2. Procédé selon la revendication 1, dans lequel l'étape de déformation à froid est réalisée au moyen d'un poinçon (34) monobloc comprenant une empreinte (38) ayant une forme complémentaire d'une surface à former sur la pièce mécanique (10).

3. Procédé selon la revendication 1, dans lequel l'étape de compression est réalisée au moyen d'un poinçon (34) monobloc comprenant une empreinte (38) ayant une forme complémentaire d'une surface à former sur la pièce mécanique (10).

4. Procédé selon la revendication 1, dans lequel des premières surfaces (22A, 23A, 24A, 26A), situées au niveau d'une première région de la pièce mécanique (10), sont formées lors de l'étape de compression et dans lequel des secondes surfaces (22B, 23B, 24B, 26B), situées au niveau d'une seconde région de la pièce mécanique distincte de la première région, sont formées lors de l'étape de déformation à froid.

5. Procédé selon la revendication 4, dans lequel les premières surfaces (22A, 23A, 24A, 26A) et les secondes surfaces (22B, 23B, 24B, 26B) sont symétriques par rapport à un plan de symétrie de la pièce mécanique (10), et dans lequel l'étape de compression est réalisée au moyen d'un poinçon (34) comprenant des empreintes (38) ayant une forme complémentaire des premières surfaces, l'étape de déformation à froid étant réalisée au moyen du même poinçon, les secondes surfaces étant formées au moyen des empreintes (38) du poinçon.

6. Procédé selon la revendication 1, dans lequel la pièce mécanique (10) est un baladeur de boîte de vitesses.
